# EUROPEAN PATENT SPECIFICATION

(11) **EP 2 904 256 B1**
(45) Date of publication and mention of the grant of the patent: **16.11.2016**
(21) Application number: 12780427.6
(22) Date of filing: 02.10.2012
(51) Int. Cl.: F02M 21/02, C01B 3/06, F02B 43/10, F02M 25/12, F02D 19/06, F02D 19/08

(54) **HYDROGEN GENERATION OUT OF WATER**
WASSERSTOFFERZEUGUNG AUSGEHEND VON WASSER
PRODUCTION D'HYDROGÈNE À PARTIR DE L'EAU

(43) Date of publication of application: 12.08.2015
(73) Proprietor: Caterpillar Energy Solutions GmbH, 68167 Mannheim (DE)
(72) Inventor: SCHILIRÒ, Michele, 1740 Ferpicloz (CH)
(74) Representative: BRP Renaud & Partner mbB Rechtsanwälte Patentanwälte Steuerberater
(86) International application number: PCT/EP2012/069441
(87) International publication number: WO 2014/053168

(56) References cited:
- EP-A1- 1 712 517
- WO-A2-2011/130612
- DE-A1- 2 056 131
- DE-A1- 2 649 164
- US-A- 4 547 356
- US-B1- 6 405 720

## Description

The present invention relates to a spark-ignited Otto gas engine and a procedure for running a spark-ignited Otto gas engine having a combustion chamber and an exhaust gas duct and a thermal reformer, the reformer being connected to at least a part of the exhaust gas duct for supplying the reformer with heat.

It is known from EP 1 712 517 A1 to produce H₂ out of steam using catalysts and solar energy. During this process, the H-molecule is separated from the H₂O at 500°C to 800°C and implemented in the catalyst structure. The regeneration of the catalyst requires temperatures of 1050°C to 1300°C. But temperatures of 1050°C to 1300°C are not obtainable from a gas engine, i. e. the exhaust gas.

DE 2 056 131 A discloses a procedure for running an Otto-engine using petrol or fuel and adding hydrogen. The hydrogen is produced by catalytic reforming of hydrocarbons; in doing so, the energy for generating hydrogen is taken from the exhaust gas.

US 4,547,356 discloses a method of producing hydrogen in an energy system, comprising placing porous material in a reaction zone of a reactor, heating said reaction zone, heating water, feeding the water at elevated temperatures through said reaction zone for interaction with the porous material resulting in the disassociation of hydrogen from the water, and diffusing the resulting hydrogen through said porous material to separate the hydrogen from the water and disassociated oxygen.

Object of the invention is to configure and arrange a spark-ignited gas engine in such a way that a higher degree of efficiency is realized.

According to the invention, the aforesaid object is achieved in that said reformer is supplied with water and converts water (H₂O) into hydrogen (H₂) according to the following reactions:

R1 : MO_{red} + H₂O <<->> MOₒₓ + H₂ (separation),

R2: MOₒₓ <<->> MO_{red} + O₂ (regeneration)

and in that there are additional heating means powered by a part of the gas the engine is powered with in order to achieve one or both of the following exothermic oxidation reactions:

R3: CH₄ + 2O₂ <<->> 2H₂O + CO₂ (oxidation),

R3' : CₙHₘ + _{(n/z)}O₂ «-» _{(m/2})H₂ + nCO, (partial oxidation)

whereby the heating means are thermodynamically coupled to the reformer for additionally heating the reformer. Due to the fact that the reformer is being supplied with additional heat by the heating means, particularly process R2 is supplied with extra heat to regenerate the catalyst and discharge H₂.

According to the invention, the aforesaid object is also achieved by said procedure in which said reformer is supplied with water and converts water (H₂O) into hydrogen (H₂) according to the following reactions:

R1 : MOred + H₂O <<->> MOₒₓ + H₂,

R2 : MOox <<->> MO_{red} + O₂,

and in that there are additional heating means, said heating means being powered by a part of the gas the engine is powered with in order to achieve the following exothermic oxidation reaction:

R3: CH₄ + 2O₂ <<->> 2H₂O + CO₂,

R3': CnHm + _{(n/2)}O₂ <<->> _{(m/2)}H₂ + nCO,

whereby the heating means are thermodynamically coupled to the reformer and are additionally heating the reformer.

The invention is to transform the exhaust energy of the engine via reactions R1, R2 into chemical stored energy in form of H₂, using a part of the gas, the engine is powered with.

In case of reaction R3' the product gas carbon monoxide is charged to the engine, too.

The same engine that has produced the chemical stored energy (H₂) is supplied with the energy restored in H₂. The reformer is supplied with the exhaust gas as well as with further thermal energy, achieved by oxidation of for example methane during the processes R3, R3'. The methane is part of the gas the engine is powered with. Reactions R1 and R2 which are endothermic are coupled with reactions R3, R3' which are exothermic.

The produced H₂ is mixed to the gas mixture which increases the efficiency of the engine. Though the efficiency asset results in part from the methane for the oxidation reaction R3, R3', energy is recharged with H₂, produced by using exhaust gas energy.

The efficiency of the H₂ production by a chemical reaction is not subject to restrictions like a thermo dynamic cyclic process. Therefore, the thermal exhaust energy used in this chemical process is reformed with a much better degree of efficiency which leads to a better degree of efficiency overall.

Moreover recharging this produced H₂ leads to a combustion which is better, faster and more balanced. In addition to this, it is possible to reduce the nitrogen oxide (NOₓ) and the formaldehyde, i.e. methanal (CH₂O) emissions, because the added H₂ has a catalytic effect on the combustion. For this the efficiency of the engine is increased, too.

A normally driven 1 MW engine with a coupled generator has a degree of efficiency of about 43,7 %. If this engine is driven with said reformer (R1 and R2) including the oxidation step R3, the degree of efficiency raises up to about 50,5 %.

It can also be an advantageto have at least one compressor for loading a combustion chamber with an air-gas-mixture, whereby at least one compressor is motor-driven. Additionally to the energy of reaction R3, R3', the exhaust gas turbine of the turbo charger could be replaced and the air compressor could be driven by electricity. This allows the exhaust gas to keep more of its thermal energy, i.e. higher exhaust gas temperatures of about 550° C to 600° C, which are 100° C to 150° C higher as in case of an exhaust gas turbine. These temperatures are used for the reactions R1 and R2. In this case, the degree of efficiency raises up to about 53 %.

Over all an increase of about 10 % for a normally driven 1 MW engine is possible.

A successive alternation of two reactors is possible. While one is producing H₂, the other is regenerated. The two reactors are placed within the exhaust gas stream.

Although energy is required to drive the electric motor, the overall engine efficiency is higher. One reason is the fact that the efficiency of the reforming process is much higher than the efficiency of the turbine.

Another increase in efficiency is achieved with an exhaust gas turbine and with at least one further compressor, said further compressor being mechanically operated via the exhaust gas turbine, said exhaust gas turbine being positioned downstream to the reformer, as claimed in claim 1. Adapted to the procedure, the engine has an exhaust gas turbine and at least one further compressor for loading a combustion chamber with an air-gas-mixture, said further compressor being mechanically operated via the exhaust gas turbine, said turbine being positioned downstream to the reformer, as claimed in claim 4. The pressure of the exhaust gas can be used for a pre-compression of the air-gas-mixture. Thus, the energy for the electrically driven compressor is reduced.

Especially stationary engines which are integrated in a cogeneration process are supplied with natural gas, for which a addition of hydrogen is advantageous, especially in view of generating a higher rate of combustion. Other advantages and details of the invention are explained in the claims and in the description as well as shown in the figures, in which:
Figure 1 shows a schematic diagram of a supply chain of an engine generator unit with a H₂ reformer;
Figure 2 shows a schematic diagram similar to figure 1 with an electrically driven compressor.

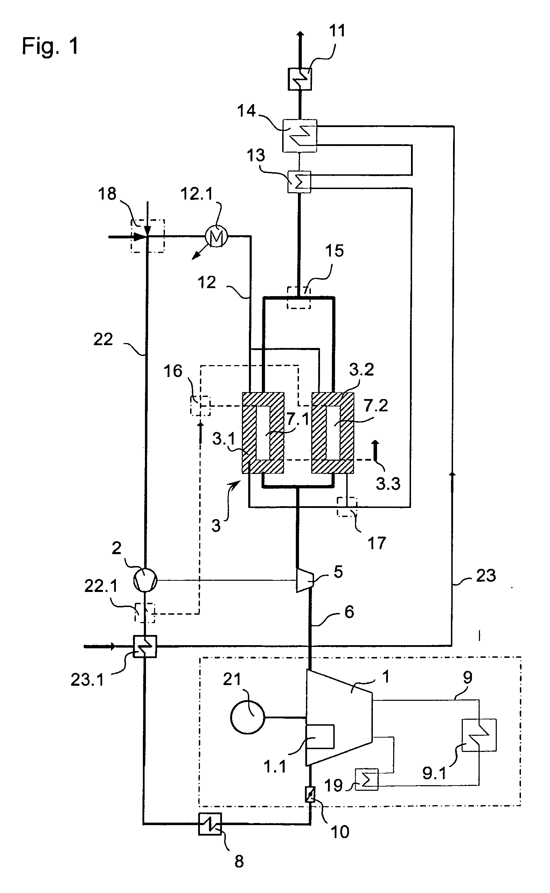

The schematic diagram in Figure 1 shows the supply chain of a spark-ignited gas engine 1 with an air-gas mixture and the exhaust system of the spark-ignited gas engine 1.

Starting from a gas mixer 18 at which the ambient air is mixed with the combustion gas, an air-gas duct 22 is conducted via a compressor 2 and an air-gas mixture cooler 8 to the gas engine 1 or to a combustion chamber 1.1 of the gas engine 1. A throttle valve 10 that is controlled based on the output of the gas engine 1 is provided in this air-gas duct 22 immediately upstream of the gas engine 1.

The gas engine 1 comprises an exhaust gas duct 6 in which an exhaust gas turbine 5 is provided downstream from the gas engine 1 that is used to drive the above-mentioned compressor 2. After passing through the exhaust gas turbine 5, the exhaust gas is conducted through a reformer 3 where it dissipates heat to the reformer 3 or the first reactor 3.1 or the second reactor 3.2, respectively. The exhaust gas passes the reformer 3 in parallel via two separate exhaust gas streams that are coupled or controlled, respectively, via a valve for exhaust gas 15 and associated with the respective reactor 3.1, 3.2. The valve for exhaust gas 15 is followed by a heat exchanger or superheater 13, respectively, and a downstream evaporator 14 for the water circuit 23 described below. An exhaust gas heat exchanger 11 is provided downstream before the exhaust gas is carried off to the exhaust system not shown here.

A water circuit or water duct 23 is provided for supplying the reformer 3 with water for producing hydrogen. First, the water carried in it is preheated by a heat exchanger for water 23.1 coupled to the air-gas duct 22, wherein the heat is taken from the compressed exhaust gas-air mixture. Then the water is heated in the evaporator 14 mentioned above, and the vapor is overheated accordingly in the downstream superheater 13 before it is returned to one of the two reactors 3.1, 3.2 of the reformer 3 via a respective valve for water 17. The hydrogen that is produced during reformation is fed to the gas mixer 18, and thus to the air-gas mixture, for combustion in the gas engine 1 via a hydrogen duct 12 and a condenser 12.1. The oxygen generated during hydrogen generation is carried off into the environment via a waste gate 3.3.

In order to achieve the temperatures required in the respective reactor 3.1, 3.2 or in the reformer 3, respectively, the respective reformer additionally comprises heating means 7.1, 7.2 that are also supplied with the air-gas mixture fed to the gas engine 1. For this purpose, the air-gas duct 22 comprises an air-gas valve 22.1 via which the required air-gas mixture is supplied via another air-gas valve 16 to the respective reactor 3.1, 3.2 or the respective heating means 7.1, 7.2. The CO₂ exhaust gas that is produced when operating the respective heating means 7.1, 7.2 is carried off via a waste gate 3.3.

In addition, the gas engine 1 comprises a cooling circuit 9 with an engine heat exchanger 9.1 for cooling the gas engine 1. The cooling circuit 9 is also connected to an oil cooling exchanger 19.

The measure described above for the reformer 3 considerably improves the efficiency of a gas engine 1-generator 21 unit.

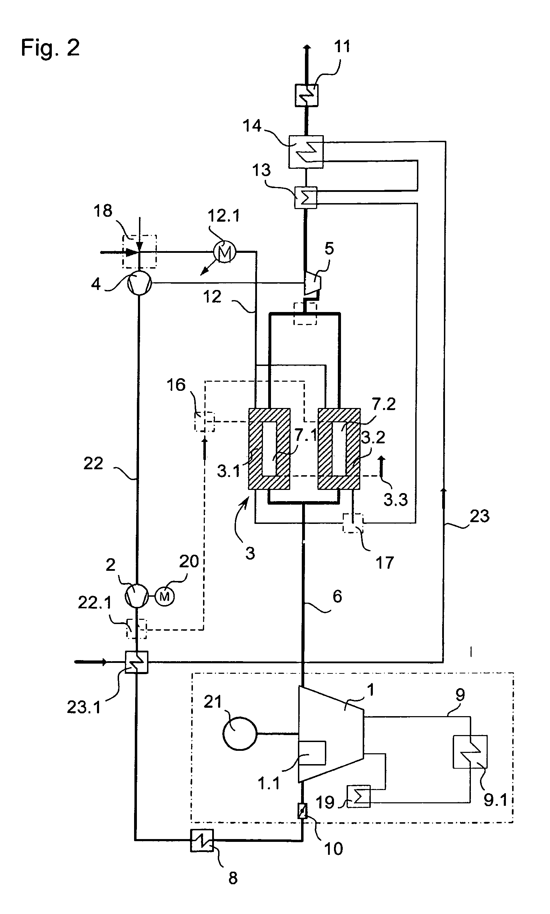

According to the functional diagram shown in Figure 2, the compressor 2 is driven by an electric motor 20. The exhaust gas turbine 5 as shown in Figure 1 is eliminated. The exhaust gas, when it enters the reformer 3, has a temperature that is 100°C to 150°C higher. This higher temperature serves improved operation of the reformer 3 or the respective reactor 3.1, 3.2 such that the heating means 7.1, 7.2 can generate less heating output.

Additionally to that there is one further compressor 4 for preloading the air-gas-mixture, said further compressor 4 being mechanically operated via an exhaust gas turbine 5, said exhaust gas turbine 5 being positioned downstream to the reformer 3.

### Reference list

- 1: spark-ignited gas engine, gas engine
- 1.1: combustion chamber
- 2: compressor
- 3: reformer
- 3.1: first reactor
- 3.2: second reactor
- 3.3: waste gate of reformer
- 4: further compressor
- 5: exhaust gas turbine
- 6: exhaust gas duct, exhaust gas stream
- 7.1: heating means
- 7.2: heating means
- 8: air-gas-mixture cooler
- 9: cooling system / circuit
- 9.1: cooling water heat exchanger
- 10: throttle valve
- 11: exhaust gas heat exchanger
- 12: hydrogen duct
- 12.1: condenser
- 13: superheater
- 14: evaporator
- 15: valve for exhaust gas
- 16: valve for air-gas
- 17: valve for water
- 18: gas mixer
- 19: oil cooling exchanger
- 20: electric motor
- 21: generator
- 22: air-gas-duct
- 22.1: air-gas-valve
- 23: water circuit, water duct
- 23.1: heat exchanger for water

## Claims

1. Spark-ignited gas engine (1) having a combustion chamber (1.1) and an exhaust gas duct (6) and a thermal reformer (3), the reformer (3) being connected to at least a part of the exhaust gas duct (6) for supplying the reformer (3) with heat, wherein said reformer (3) is supplied with water and converts water (H₂O) into hydrogen (H₂) according to the following reactions:
R1 : MO_{red} + H₂O <<**-**>> MOₒₓ + H₂,
R2 : MOₒₓ <<->> MOred + O₂,
and in that there are additional heating means (7.1), said heating means (7.1) being powered by a part of the gas the engine (1) is powered with in order to achieve the following exothermic oxidation reaction:
R3: CH₄ + O₂ <<->> 2H₂O + CO₂, or
R3': CnHm + _{(n/2)}O₂ <<->> _{(m/2)}H₂ + ₙCO,
whereby the heating means (7.1) are thermodynamically coupled to the reformer (3) for additionally heating the reformer (3), **characterized in that** the spark-ignited gas engine (1) further has an exhaust gas turbine (5) and at least one further compressor (4) for loading the air-gas-mixture, said further compressor (4) being mechanically operated via the exhaust gas turbine (5), said exhaust gas turbine (5) being positioned downstream to the reformer (3).

2. Spark-ignited gas engine (1) according to claim 1 having at least one compressor (2) for loading the combustion chamber (1.1) with an air-gas-mixture, whereby at least one compressor (2) is driven by a motor (20).

3. Spark-ignited gas engine (1) according to claim 1 or 2, in which the engine is stationary.

4. Procedure for running spark-ignited gas engine (1) with a combustion chamber (1.1), said gas engine (1) generating an exhaust gas stream (6) and said gas engine (1) having a thermal reformer (3), said reformer (3) being supplied with heat from at least a part of the exhaust gas stream (6), wherein said reformer (3) is supplied with water and converts water (H₂O) into hydrogen (H₂) according to the following reactions:
R1: MOred + H₂O <<->> MOₒₓ + H₂,
R2 : MOₒₓ <<->> MOred + O₂,
and in that there are additional heating means (7.1, 7.2), said heating means (7.1, 7.2) being powered by a part of the gas engine (1) is powered with in order to achieve the following exothermic oxidation reaction:
R3: CH₄ + O₂ <<->> 2H₂O + CO₂, or
R3': CₙHₘ + _{(n/2)}O₂ <<->> _{(m/2)}H₂ + ₙCO,
whereby the heating means (7.1, 7.2) are thermodynamically coupled to the reformer (3) and are additionally heating the reformer (3), **characterized in that** the engine (1) has an exhaust gas turbine (5) and at least one further compressor (4) for loading the air-gas-mixture, said compressor (4) is mechanically operated via the exhaust gas turbine (5), said turbine being positioned downstream to the reformer (3).

5. Procedure according to claim 4, in which the engine (1) has at least one compressor (2) for loading the combustion chamber (1.1) with air-gas-mixture, said compressor (2) is driven by electricity.

## Patentansprüche

1. Funkengezündeter Gasmotor (1) mit einer Brennkammer (1.1) und einem Abgaskanal (6) und einem thermischen Reformer (3), wobei der Reformer (3) mit zumindest einem Teil des Abgaskanals (6) verbunden ist, zum Versorgen des Reformers (3) mit Wärme, wobei der Reformer (3) mit Wasser versorgt wird und Wasser (H₂O) in Wasserstoff (H₂) umwandelt, gemäß den folgenden Reaktionen:
R1: MO_{red} + H₂O <<->> MOₒₓ + H₂,
R2 : MOox <<->> MO_{red} + O₂,
und dadurch, dass zusätzliche Heizmittel (7.1) zur Verfügung stehen, wobei die Heizmittel (7.1) von einem Teil des Gases angetrieben werden, das den Motor (1) antreibt, um die folgende exothermische Oxidationsreaktion zu erreichen:
R3 : CH₄ + O₂ <<->> 2H₂O + CO₂, oder
R3': CₙHₘ + _{(n/2)}O₂ <<->> _{(m/2)}H₂ + ₙCO,
wobei die Heizmittel (7.1) thermodynamisch mit dem Reformer (3) verbunden sind zum zusätzlichen Erwärmen des Reformers (3),
**dadurch gekennzeichnet, dass** der funkengezündete Gasmotor (1) weiterhin eine Abgasturbine (5) und zumindest einen weiteren Kompressor (4) zum Laden des Luft-Gas-Gemisches aufweist, wobei der weitere Kompressor (4) mechanisch über die Abgasturbine (5) betrieben wird, und die Abgasturbine (5) stromabwärts von dem Reformer (3) angeordnet ist.

2. Funkengezündeter Gasmotor (1) nach Anspruch 1, aufweisend zumindest einen Kompressor (2) zum Laden der Brennkammer (1.1) mit einem Luft-Gas-Gemisch, wobei der zumindest eine Kompressor (2) von einem Motor (20) angetrieben wird.

3. Funkengezündeter Gasmotor (1) nach Anspruch 1 oder 2, wobei der Motor stationär ist.

4. Verfahren zum Betrieb eines funkengezündeten Gasmotors (1) mit einer Brennkammer (1.1), wobei der Gasmotor (1) einen Abgasstrom (6) erzeugt und der Gasmotor (1) einen thermischen Reformer (3) aufweist, wobei der Reformer (3) mit Wärme von zumindest einem Teil des Abgasstromes (6) versorgt wird, wobei der Reformer (3) mit Wasser versorgt wird und Wasser (H₂O) in Wasserstoff (H₂) umwandelt, gemäß den folgenden Reaktionen:
R1: MO_{red} + H₂O < <->> MOox + H₂,
R2 : MOox <<->> MO_{red} + O₂,
und dadurch, dass zusätzliche Heizmittel (7.1, 7.2) zur Verfügung stehen, wobei die Heizmittel (7.1, 7.2) von einem Teil des Gases angetrieben werden, das den Motor (1) antreibt, um die folgende exothermische Oxidationsreaktion zu erreichen:
R3: CH₄ + O₂ <<->> 2H₂O + CO₂, oder
R3': CₙHₘ + _{(n/2)}O₂ <<->> _{(m/2)}H₂ + ₙCO,
wobei die Heizmittel (7.1, 7.2) thermodynamisch mit dem Reformer (3) verbunden sind und den Reformer (3) zusätzlich erwärmen, **dadurch gekennzeichnet, dass** der Motor (1) eine Abgasturbine (5) und zumindest einen weiteren Kompressor (4) zum Laden des Luft-Gas-Gemisches aufweist, wobei der weitere Kompressor (4) mechanisch über die Abgasturbine (5) betrieben wird, und die Abgasturbine (5) stromabwärts von dem Reformer (3) angeordnet ist.

5. Verfahren nach Anspruch 4, wobei der Motor (1) zumindest einen Kompressor (2) zum Laden der Brennkammer (1.1) mit einem Luft-Gas-Gemisch aufweist, und der Kompressor (2) mittels Elektrizität angetrieben wird.

## Revendications

1. Moteur à gaz à allumage par étincelle (1) comprenant une chambre de combustion (1.1) et une conduite de gaz d'échappement (6) et un reformeur thermique (3), le reformeur (3) étant connecté à au moins une partie de la conduite de gaz d'échappement (6) pour alimenter le reformeur (3) en chaleur, dans lequel ledit reformeur (3) est alimenté en eau et convertit l'eau (H₂O) en hydrogène (H₂) selon les réactions suivantes :
R1 : MO_{red} + H₂O <<->> MOₒₓ + H₂,
R2 : MOₒₓ <<->> MO_{red} + O₂,
et dans celui-ci il existe des moyens de chauffage supplémentaires (7.1), lesdits moyens de chauffage (7.1) étant alimentés par une partie du gaz avec lequel le moteur (1) est alimenté afin de réaliser la réaction d'oxydation exothermique suivante :
R3 : CH₄ + O₂ <<->> 2H₂O + CO₂, ou
R3' : CₙHₘ + _{(n/2)}O₂ <<**-**>> _{(m/2)}H₂ + ₙCO,
les moyens de chauffage (7.1) étant ainsi thermodynamiquement couplés au reformeur (3) pour chauffer davantage le reformeur (3), **caractérisé en ce que** le moteur à gaz à allumage par étincelle (1) comprend en outre une turbine à gaz d'échappement (5) et au moins un autre compresseur (4) pour charger le mélange air-gaz, ledit autre compresseur (4) étant commandé mécaniquement par la turbine à gaz d'échappement (5), ladite turbine à gaz d'échappement (5) étant placée en aval du reformeur (3).

2. Moteur à gaz à allumage par étincelle (1) selon la revendication 1, comprenant au moins un compresseur (2) pour charger dans la chambre de combustion (1.1) un mélange air-gaz, afin qu'au moins un compresseur (2) soit entrainé par un moteur (20).

3. Moteur à gaz à allumage par étincelle (1) selon la revendication 1 ou 2, dans lequel le moteur est stationnaire.

4. Mode opératoire pour faire fonctionner un moteur à gaz à allumage par étincelle (1) avec une chambre de combustion (1.1), ledit moteur à gaz (1) générant un courant de gaz d'échappement (6) et ledit moteur à gaz (1) comprenant un reformeur thermique (3), ledit reformeur (3) étant alimenté en chaleur à partir d'au moins une partie du courant de gaz d'échappement (6), dans lequel ledit reformeur (3) est alimenté en eau et convertit l'eau (H₂O) en hydrogène (H₂) selon les réactions suivantes :
R1 : MO_{red} + H₂O <<->> MOₒₓ + H₂,
R2 : MOₒₓ <<->> MO_{red} + O₂,
et dans celui-ci il existe des moyens de chauffage supplémentaires (7.1, 7.2), lesdits moyens de chauffage (7.1, 7.2) étant alimentés par une partie du gaz avec lequel le moteur (1) est alimenté afin de réaliser la réaction d'oxydation exothermique suivante :
R3 : CH₄ + O₂ <<->> 2H₂O + CO₂, ou
R3' : CₙHₘ + (n/2)O₂ <<->> _{(m/2)}H₂ + ₙCO,
les moyens de chauffage (7.1, 7.2) étant ainsi thermodynamiquement couplés au reformeur (3) pour chauffer davantage le reformeur (3), **caractérisé en ce que** le moteur (1) comprend une turbine à gaz d'échappement (5) et au moins un autre compresseur (4) pour charger le mélange air-gaz, ledit compresseur (4) étant commandé mécaniquement par la turbine à gaz d'échappement (5), ladite turbine étant placée en aval du reformeur (3).

5. Mode opératoire selon la revendication 4, dans lequel le moteur (1) comprend au moins un compresseur (2) pour charger dans la chambre de combustion (1.1) un mélange air-gaz, ledit compresseur (2) est entraîné par de l'électricité.
